Europäisches Patentamt

European Patent Office

Office européen des brevets

(19)

(11) Numéro de publication : **0 094 852**
**B1**

(12) **FASCICULE DE BREVET EUROPÉEN**

(45) Date de publication du fascicule du brevet :
30.07.86

(21) Numéro de dépôt : **83400802.1**

(22) Date de dépôt : **22.04.83**

(51) Int. Cl.⁴ : **G 11 B 11/10, G 11 C 13/06**

(54) Procédé opto-électronique de lecture d'informations contenues sur un disque magnétique et circuit pour le mettre en œuvre.

(30) Priorité : **14.05.82 FR 8208406**

(43) Date de publication de la demande :
**23.11.83 Bulletin 83/47**

(45) Mention de la délivrance du brevet :
**30.07.86 Bulletin 86/31**

(84) Etats contractants désignés :
**DE GB IT NL SE**

(56) Documents cités :
**EP-A- 0 077 693**
**BE-A- 831 264**
**DE-A- 2 552 694**
**FR-A- 2 057 678**
**US-A- 4 198 701**
**US-A- 4 245 233**
**NEUES AUS DER TECHNIK, no. 5, 1 octobre 1976, page 3, Würzburg, DE., "Magnetischer oder optischer Aufnehmer"**
**SOLID STATE TECHNOLOGY, vol. 17, no. 4, avril 1974, pages 67-77, Washington, N.Y., USA, J.E. CARNES et al.: "Charge-coupled devices and applications"**

(73) Titulaire : **CII HONEYWELL BULL**
**94 Avenue Gambetta P.C. OW009**
**F-75020 Paris (FR)**

(72) Inventeur : **Faugeras, Philippe M.**
**11 rue de Silly**
**F-92100 Boulogne (FR)**

(74) Mandataire : **Gouesmel, Daniel et al**
**94, avenue Gambetta**
**F-75020 Paris (FR)**

Jouve, 18, rue St-Denis, 75001 Paris, France

## Description

La présente invention concerne un procédé opto-électronique de lecture d'informations contenues sur un disque magnétique et le circuit pour le mettre en œuvre. Elle est notamment applicable aux mémoires magnéto-optiques utilisées principalement dans les systèmes de traitement de l'information.

On sait que les systèmes de traitement de l'information comprennent essentiellement une unité centrale de traitement de l'information et une pluralité d'organes d'entrée/sortie des informations, encore appelées « systèmes périphériques ». Ces systèmes permettent d'introduire les données dans l'unité centrale où celles-ci sont traitées par des unités arithmétiques et logiques, puis renvoyées après ce traitement, dans les organes de sortie. Le résultat des opérations est effectué par l'unité centrale et est alors soit utilisé et analysé immédiatement par l'utilisateur du système de traitement de l'information, soit emmagasiné pour des périodes de temps variable, dans des mémoires, plus souvent appelées « mémoires de masse ».

Parmi les mémoires de masse couramment employées, on utilise plus particulièrement les mémoires à disques magnétiques.

Dans celles-ci, les informations sont portées par des disques magnétiques, et sont contenues à l'intérieur de pistes d'enregistrement concentriques circulaires.

Généralement, une suite d'informations magnétiques enregistrée sur une piste d'un disque se présente sous la forme d'une succession de petits domaines magnétiques appelés « domaines élémentaires » répartis sur toute la longueur de la piste et ayant des inductions magnétiques de même module et de sens opposé.

La tendance actuelle du développement des mémoires à disques est d'accroître aussi bien la densité longitudinale que la densité radiale des informations : on rappelle que la densité longitudinale (ou encore densité linéique) est définie comme le nombre d'informations par unité de longueur mesurée suivant la circonférence d'une piste, alors que la densité radiale est définie comme le nombre de pistes par unité de longueur mesurée suivant le diamètre d'une piste. A cet effet, les mémoires à disques magnétiques dites « mémoires magnéto-optiques » représentent des solutions intéressantes puisque les densités radiale et longitudinale obtenues sont de l'ordre respectivement de 10 000 pistes par centimètre (25 000 pistes par pouce, ou 25 000 tpi) et 10 000 bits par centimètre (ou encore 25 000 bits par pouce, ou 25 000 bpi). On rappelle que l'on désigne sous le nom vocable anglo-saxon « bit » à la fois l'unité d'information binaire égale à 1 ou 0 et toute matérialisation de cette information, qui peut être par exemple un domaine magnétique élémentaire contenu sur une piste d'un disque magnétique ou encore un signal électrique analogique ou logique. Ainsi, dans les mémoires magnéto-optiques les dimensions des domaines magnétiques élémentaires sont de l'ordre de 1 à 2 microns, et la largeur des pistes est du même ordre de grandeur.

On rappelle que les mémoires magnéto-optiques sont des mémoires où l'écriture est effectuée par des moyens en grande partie magnétiques, alors que la lecture est effectuée par un dispositif opto-électronique comprenant un ensemble de moyens optiques et des transducteurs photo-électroniques transformant la lumière qu'ils reçoivent en un signal électrique. En d'autres termes, les mémoires magnéto-optiques sont des mémoires où les informations sont portées par des disques magnétiques, et lues par des dispositifs opto-électroniques.

Dans les mémoires magnéto-optiques le mode de lecture des informations repose sur le principe d'interaction d'une lumière polarisée avec l'état magnétique de la couche constituant le disque magnétique, interaction qui a pour conséquence la rotation du vecteur champ électrique dans le plan perpendiculaire à la direction de propagation (et par suite du champ magnétique du rayonnement électro-magnétique constituant la lumière polarisée).

On rappelle qu'un rayonnement électro-magnétique (on dit encore par extension une lumière) est polarisé de façon rectiligne dans le plan, lorsque le vecteur champ électrique (et par suite le vecteur induction magnétique) conserve toujours la même direction dans le plan perpendiculaire à la direction de propagation du rayonnement et ce quelle que soit la position de ce plan dans l'espace, et quel que soit l'instant d'observation. Le plan de polarisation est défini comme étant celui qui contient la direction de propagation de la lumière et le vecteur champ électrique.

On connaît des dispositifs opto-électroniques de lecture d'informations contenues sur un support magnétique, utilisant le principe d'interaction mentionné ci-dessus. Un tel dispositif est par exemple décrit dans la demande de brevet française N° 81 19543 déposée le 16 Octobre 1981 par la Compagnie demanderesse sous le titre « Dispositif opto-électronique de lecture d'informations contenues sur un support magnétique ». Un tel dispositif a pour principe d'envoyer sur la surface du disque un faisceau de lumière normale relativement mono chromatique dont le diamètre est tel qu'il permet d'observer une pluralité de pistes (de l'ordre d'une dizaine à quelques dizaines) et sur chaque piste une pluralité de domaines magnétiques, et de projeter l'image de la surface du disque éclairée par le faisceau de lumière sur un plan où sont disposés une pluralité de transducteurs photo-électroniques. Si l'on suppose le milieu magnétique du disque tel que son aimantation soit normale à la surface de la couche magnétique, l'aimantation étant alors dite perpendiculaire (on pourrait également utiliser un milieu magnétique dont l'aimantation est longitudinale, c'est-à-dire parallèle à la couche elle-même), on observe qu'après réflexion du faisceau incident sur cette couche, et ce pour chaque domaine magnétique, le vecteur champ électrique de la lumière incidente subit une rotation dans le plan normal à la direction de propagation de la lumière ; qu'on dit par convention, égale à un angle ($-\theta$), lorsque le faisceau lumineux rencontre un domaine d'aimantation négative et égale à ($+\theta$) lorsque le faisceau lumineux incident rencontre un domaine d'aimantation positif. Ce phénomène physique qui vient d'être décrit (l'interaction de la lumière incidente avec l'état magnétique du matériau qui a pour conséquence une rotation du vecteur champ magnétique et du vecteur champ électrique) est appelé « effet Kerr ».

On voit que pour déterminer la valeur d'un bit, il suffit de détecter la rotation du vecteur champ électrique. Ceci est effectué au moyen d'un appareil appelé analyseur constitué d'un cristal privilégiant une direction de propagation de la lumière, que l'on dispose de façon que cette direction soit à 90° de la direction qu'occupe le vecteur champ électrique de la lumière réfléchie lorsque celle-ci s'est réfléchie sur un domaine magnétique d'aimantation négatif. On recueille alors, dans ces conditions, à la sortie de l'analyseur une lumière d'intensité nulle. Lorsque la lumière se réfléchit sur un domaine magnétique d'aimantation positive, on voit par contre à la sortie de l'analyseur, une lumière d'intensité non nulle. En d'autres termes, les domaines d'aimantation négative apparaîtront en noir sur le plan où sont disposés les transducteurs photo-électroniques, plans situés à la sortie de l'analyseur, alors que les domaines d'aimantation positive apparaîtront en clair. On voit que l'image de la surface du disque éclairée par le faisceau de diamètre $\phi$, qui est projetée sur le plan, est constituée d'un ensemble de taches lumineuses sombres ou claires suivant la valeur des bits d'informations enregistré sur chaque piste du disque magnétique.

Plus précisément, le dispositif opto-électronique dont le principe de fonctionnement est rappelé ci-dessus, comprend :

— une source émettant un faisceau de lumière polarisée envoyé sur la surface du support en un endroit déterminé de celui-ci, dont l'interaction avec l'état magnétique du support en cet endroit produit une rotation du plan de polarisation de la lumière,

— des moyens de détection de l'angle de rotation de ce plan, comprenant un analyseur de lumière, et des transducteurs opto-électroniques, délivrant un signal électrique dont la tension (ou courant) est fonction de la valeur des informations situées en cet endroit), et est caractérisé en ce qu'il comprend :

— des moyens optiques de focalisation de faisceau de lumière à grand champ d'observation permettant d'observer simultanément une pluralité de pistes et une pluralité d'informations sur chaque piste ;

— des moyens de projection de l'image de la surface du support observé par l'objectif sur un plan P où sont disposés les transducteurs opto-électroniques.

On connaît des dispositifs permettant de transformer des taches lumineuses en un signal logique comprenant une pluralité de bits dont chacun correspond à une tache lumineuse.

Un premier dispositif est par exemple décrit dans le document US-A-4.198.701.

Un tel dispositif permet de lire les informations enregistrées sur un disque optique. Ces informations sont transformées par un dispositif optique en une image formée d'une pluralité d'éléments ou taches lumineuses. Les taches lumineuses de l'image sont lues simultanément par une rangée linéaire de photodiodes à auto-balayage, plusieurs photodiodes pouvant être associées à une même tache lumineuse. On peut donc dire que la lecture des taches lumineuses d'une image est effectuée en parallèle par l'ensemble des photodiodes de la rangée. Les signaux fournis par cette rangée sont ensuite envoyés à un convertisseur analogique digital, et échantillonnés par celui-ci de manière à ce qu'ils soient d'abord convertis d'une forme analogique à une forme numérique et ensuite transformés en signaux de bits délivrés en série. On voit ainsi que le rôle joué par l'ensemble constitué par la rangée de photodiodes et le convertisseur analogique digital est analogue à un ensemble constitué par un registre parallèle associé à un registre à décalage série.

Afin d'améliorer le rapport signal/bruit des dispositifs optoélectroniques de lecture d'informations contenues sur un support magnétique, tel que celui décrit ci-dessus, il est connu d'utiliser le principe de lecture par redondance qui permet de lire plusieurs fois de suite une même information. Un dispositif de lecture d'informations contenues sur un support d'enregistrement optique utilisant la redondance est par exemple décrit dans le document Neues Aus Der Technik, N° 5, du 1er Octobre 1976, page 3. Selon ce document, les informations enregistrées sur un support peuvent être lues par plusieurs transducteurs photo-électriques alignés et orientés selon la direction du mouvement du support. Chaque élément d'informations est lu plusieurs fois de suite, les signaux qui en résultent étant sommés avec des retards appropriés. Lors de cette sommation, le signal S de lecture d'un élément d'information est multiplié par n, où n est le nombre de lectures, alors que le signal de bruit n'est pas multiplié dans la même proportion, mais dans une proportion plus faible.

La présente invention permet de combiner les dispositifs décrits dans les documents US-A-4.198.701 et « Neues Aus Der Technik » précités, ainsi que les avantages qui résultent de chacun de ceux-ci, tout en résolvant le problème suivant résultant du mode particulier d'écriture d'informations sur des disques. En effet, du fait que l'écriture des informations sur les disques magnétiques est effectuée à fréquence constante $f_E$, les domaines magnétiques enregistrés sur la piste interne du disque sont beaucoup plus courts que les domaines magnétiques enregistrés sur la piste externe. Cette variation de longueur se reproduit au niveau des images de ces domaines. Il en résulte donc que le nombre de transducteurs associés à l'image d'un domaine magnétique varie en fonction de la piste du disque qui est lue. Cela a pour conséquence que la fréquence du signal de lecture recueilli à la sortie des transducteurs photoélectriques du dispositif optoélectronique de lecture (ces transducteurs sont disposés suivant une matrice permettant de lire simultanément une pluralité d'informations sur une pluralité de pistes) dépend de la piste observée et croît lorsque l'on se déplace de la piste externe vers la piste interne.

Selon la présente invention, le procédé optoélectronique de lecture et le circuit pour le mettre en œuvre permettent de produire un signal de sortie dont la fréquence est égale à la fréquence d'écriture des informations magnétiques sur le disque, ce qui permet aux unités arithmétiques et logiques de l'unité centrale du système de traitement de l'information auquel appartient la mémoire magnétooptique contenant le disque, de pouvoir traiter directement ce signal.

Selon l'invention, le procédé optoélectronique de lecture d'informations contenues sur un disque magnétique, à l'intérieur d'une pluralité de pistes et enregistrées avec une fréquence telle que les domaines magnétiques ont une dimension qui varie d'une piste à l'autre, les informations étant fournies sous forme d'une pluralité de taches lumineuses par un dispositif optique observant simultanément une pluralité d'informations sur une pluralité de pistes du disque pour en projeter l'image agrandie sur une pluralité de transducteurs photoélectroniques, alignés sur au moins une rangée selon une direction parallèle à l'image d'une piste, et dont la tension de sortie (ou courant) est fonction de l'intensité lumineuse des taches, une même tache étant lue plusieurs fois de suite par un nombre correspondant de parties d'une même rangée de transducteurs, le signal de lecture de chacune des parties étant transformé en une suite d'impulsions analogiques par les opérations 1 à 4 suivantes :

1. On acquiert, à des instants d'échantillonnage déterminés, au moyen des transducteurs de la rangée l'image électrique de la portion de piste observée par le dispositif optique à ces mêmes instants, sous forme d'une pluralité d'impulsions analogiques,

2. On décale ces impulsions analogiques dans un registre à décalage parallèle,

3. On transfère ces impulsions du registre à décalage parallèle à un registre à décalage série.

4. On décale ces informations jusqu'à ce qu'elles soient toutes sorties du registre série de façon à obtenir un signal de sortie formé d'une suite d'impulsions analogiques, les suites d'impulsions résultant d'une même tache étant sommées pour obtenir un signal analogique amplifié ayant une fréquence $(f_1)$,

5. On transforme ce signal de fréquence $(f_1)$ en un signal logique dont la fréquence est égale à la fréquence d'écriture $(f_2)$ des informations magnétiques sur les pistes du disque grâce à des moyens de transformation du signal analogique en un signal logique.

L'invention concerne également le circuit de mise en œuvre du procédé décrit ci-dessus.

Ce circuit de lecture des informations contenues sur un disque magnétique à l'intérieur d'une pluralité de pistes et écrites à une fréquence telle que la dimension des domaines magnétiques varie d'une piste à l'autre, recevant les informations sous forme d'une pluralité de taches lumineuses fournies par un dispositif optique observant simultanément une pluralité d'informations sur une pluralité de pistes du disque pour en projeter l'image agrandie sur une pluralité de transducteurs photoélectroniques alignés sur au moins une rangée selon une direction parallèle à l'image d'une piste dont la tension de sortie (ou courant) est fonction de l'intensité lumineuse des taches, une même tache étant lue plusieurs fois de suite par un nombre correspondant de parties d'une même rangée de transducteurs, le signal de lecture de chacune des parties étant transformé en une suite d'impulsions analogiques par les éléments suivants :

— un registre de transfert parallèle contenant autant au moins de positions mémoire que la rangée contient de transducteurs photoélectroniques, recevant les signaux délivrés par chacun des transducteurs,

— un registre à décalage série contenant au moins autant de positions mémoire qu'il y a de transducteurs photoélectroniques, recevant les informations transmises par le registre de transfert parallèle,

— une horloge de commande délivrant un signal d'horloge de décalage de fréquence $(f_d)$ des informations du registre de transfert parallèle dans le registre série et d'une position mémoire du registre série à la position immédiatement voisine,

— un dispositif d'amplification recevant le signal délivré par le registre à décalage série et délivrant un signal formé d'une pluralité d'impulsions analogiques, les suites d'impulsions analogiques résultant d'une même tache étant sommées pour obtenir un signal analogique amplifié de fréquence $(f_1)$ qui est transformé par des moyens de transformation du signal analogique délivré par le dispositif d'amplification en un signal logique ayant une fréquence égale à la fréquence d'écriture $(f_E)$ des informations sur le disque.

D'autres caractéristiques et avantages de la présente invention apparaîtront dans la description suivante, donnée à titre d'exemple non limitatif et en se référant aux figures annexées.

Sur ces dessins :

La figure 1 composée des figures 1a, 1b, 1c, rappelle les principes de constitution et de fonctionnement d'un dispositif opto-électronique de lecture d'informations contenues sur un support magnétique tel que celui décrit dans la demande de brevet n° 8 119 543 précitée,

4

La figure 1a montrant un exemple de réalisation préférée de ce dispositif, qui est placé sur une plate-forme portant un corps principal contenant un transducteur d'écriture des informations contenues sur le support magnétique,

La figure 1b montrant comment sont disposés relativement l'un par rapport à l'autre l'objectif de grossissement du dispositif photo-électronique de lecture et le corps principal contenant le transducteur d'écriture des informations du support magnétique,

La figure 1c montrant l'image de la surface du support magnétique observée par l'objectif de grossissement du dispositif photo-électronique, telle qu'elle est projetée sur le plan P où sont disposés les transducteurs photo-électroniques de lecture des informations contenues sur le support,

La figure 2 montre les éléments constitutifs essentiels du circuit électronique de lecture d'informations mettant en œuvre le procédé de lecture photo-électronique des informations contenues sur le support magnétique, selon l'invention,

La figure 3 composée des figures 3a et 3b, montre l'encombrement relatif de l'image des bits d'informations enregistré sur le support magnétique, images projetées sur le plan P, et des transducteurs photo-électroniques de lecture disposés sur ce même plan P, selon que les images de ces bits d'informations correspondent aux informations enregistrées sur la piste interne d'un disque magnétique (ce disque est le support magnétique dont il est parlé plus haut) ou aux informations enregistrées sur la piste externe (celles qui se situent à la périphérique du disque magnétique),

La figure 4 est un exemple de réalisation préférée du circuit photo-électronique de lecture des informations contenues sur un disque magnétique, selon l'invention,

La figure 5 montre un second exemple de réalisation préférée du circuit photo-électronique de lecture d'informations contenues sur un support magnétique selon l'invention, ce circuit utilisant le principe de lecture d'informations par redondance,

La figure 6 composée des figures 6a et 6b montre comment le signal de sortie délivré par le registre parallèle du circuit selon l'invention dépend de la piste du disque observée par le dispositif optique de lecture de celle-ci.

Les figures 7a, 7b et 8 illustrent le principe de fonctionnement du circuit représenté à la figure 5.

Afin de mieux comprendre les principes de constitution et de fonctionnement du circuit électronique mettant en œuvre le procédé magnéto-optique de lecture d'informations contenues sur un support magnétique selon l'invention, il est nécessaire de faire quelques rappels sur les dispositifs optiques de lecture d'informations magnétiques contenues sur un support magnétique (tel qu'un disque magnétique) tel que le dispositif décrit dans la demande de brevet précitée.

On supposera dans la suite de la description que le support magnétique dont on cherche à lire les informations est un disque magnétique DISC.

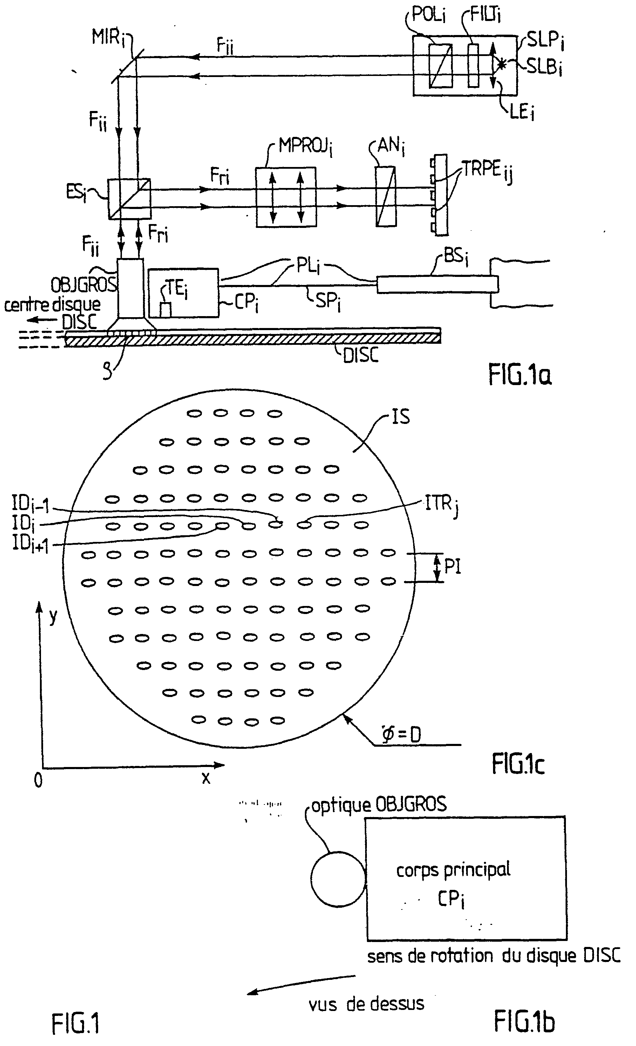

On considère les figures 1a, 1b et 1c qui illustrent ces rappels.

Les différents éléments constitutifs essentiels du dispositif de lecture optique représenté à la figure 1a, sont les suivants :

— une source de lumière polarisée $SLP_i$,

— un élément séparateur $ES_i$ du faisceau incident $F_{ii}$ et du faisceau réfléchi $F_{ri}$,

— une optique de grossissement OBJGROS permettant d'éclairer la couche magnétique CM du disque DISC sur une surface S telle que l'on observe simultanément plusieurs pistes (au moins une dizaine) et une pluralité de domaines magnétiques à l'intérieur de chaque piste,

— des moyens de projection $MPROJ_i$,

— un analyseur de lumière $AN_i$,

— un plan de projection P où est projetée l'image de la surface éclairée par le faisceau incident $F_{ii}$, image obtenue par les moyens de projection $MPROJ_i$, l'analyseur $AN_i$ étant disposé entre les moyens de projection et le plan P,

— un ensemble de transducteurs photo-électriques $TRPE_{ij}$ délivrant un ensemble de signaux électriques correspondant aux différents domaines magnétiques du disque DISC observés à l'intérieur de la surface éclairée par le faisceau de lumière incident $F_{ii}$.

La source de lumière polarisée $SLP_i$ émet un faisceau de lumière parallèle incident $F_{ii}$. Cette lumière est relativement monochromatique et peut être ou non cohérente.

Le faisceau incident $F_{ii}$ passe à travers l'élément séparateur $ES_i$ et est envoyé à travers l'optique de grossissement OBJGROS normalement à la surface de la couche magnétique CM du disque DISC. La surface ainsi éclairée S est sensiblement circulaire. Selon l'agrandissement de l'optique OBJGROS on peut observer une surface dont le diamètre est compris entre 10 microns et 500 microns environ. On peut donc observer quelques dizaines voire une centaine de pistes, et quelques dizaines voire quelques centaines de domaines magnétiques à l'intérieur de chaque piste.

Le faisceau réfléchi $F_{ri}$ passe successivement à travers l'optique OBJGROS, l'élément séparateur $ES_i$, avant de traverser les moyens de projection $MPROJ_i$. La lumière du faisceau réfléchi $F_{ri}$ passe ensuite à travers l'analyseur de lumière polarisée $AN_i$ avant d'être projetée sur le plan P où sont disposés les transducteurs photo-électriques $TRPE_{ij}$.

On obtient donc sur le plan P une image de la surface S vue au travers de l'optique OBJGROS, de l'élément séparateur $ES_i$ et des moyens de projection $MPROJ_i$. Soit IS cette image de la surface S, représentée à la figure 1c. Celle-ci est donc une image réelle du champ des informations lues à l'intérieur

5

de la surface S observée par l'optique OBJGROS. On peut obtenir en fonction de l'agrandissement g de l'ensemble optique constitué par l'optique OBJGROS et les moyens de projection MPROJ$_i$, des taches lumineuses correspondant aux domaines magnétiques contenus à l'intérieur des pistes du disque DISC, de l'ordre de quelques centaines de microns de diamètre.

Ces taches apparaissant par exemple en clair si elles correspondent à des domaines magnétiques d'aimantation positive et en noir si elles correspondent à des domaines d'aimantation négative. On rappelle, que suivant les codes d'écriture utilisés pour l'enregistrement des informations sur le disque DISC, la valeur des informations peut dépendre par exemple des dimensions des domaines magnétiques, et par suite des dimensions des taches lumineuses correspondantes, ou de la distance qui sépare deux domaines magnétiques différents voisins, et par conséquent de la distance qui sépare les taches lumineuses images de ces domaines magnétiques voisins.

La dimension de ces taches lumineuses est donc parfaitement compatible avec les dimensions des transducteurs photo-électriques que l'on trouve dans la pratique courante.

On peut donc disposer sur le plan P selon une direction OY correspondant à un rayon du disque, une pluralité de transducteurs photo-électriques (encore appelés « cellules photo-sensibles » et qui sont généralement des photo-diodes semi-conductrices) et dont le pas PI est égal au pas de l'image ITR$_{ij}$ des pistes vues à l'intérieur de la surface IS (voir figure 1c). Il est donc alors possible de lire simultanément plusieurs pistes. D'autre part si on dispose sur ce plan P une barrette de photo-diodes orientée selon un axe OX perpendiculaire à l'axe OY, c'est-à-dire selon une direction correspondant à la tangente aux pistes du disque, il est possible de relire plusieurs fois la même information. On voit qu'on peut disposer ainsi sur le plan P une matrice de photo-diodes dont le pas suivant l'axe OY est égal au pas PI et dont le pas suivant l'axe OX correspond à la distance entre les images ID$_i$ des domaines magnétiques de chacune des pistes. Ce pas est égal à la distance par exemple entre deux images successives ID$_i$ et ID$_i+_1$ représentées à la figure 1c. De ce fait, si l'on dispose à la sortie de l'ensemble des transducteurs TRPE$_{ij}$ un circuit logique électronique utilisant la redondance des informations, c'est-à-dire le fait que l'information est lue plusieurs fois (au moins deux fois), on augmentera très sensiblement le rapport signal/bruit par rapport au signal/bruit qui serait obtenu s'il n'y avait qu'un seul transducteur. En effet, si à la sortie d'un seul transducteur on recueille un signal d'amplitude S correspondant à une information donnée (une tache lumineuse), et un bruit B, et si on lit n fois, la même information, en sommant l'ensemble des signaux correspondants, on obtient à la sortie de l'additionneur un signal nS alors que le bruit est égal à B', sensiblement inférieur à B. Le rapport signal/bruit obtenu est donc nS/B' > S/B. C'est précisément l'objet du circuit électronique selon l'invention d'utiliser le principe de la redondance des informations afin d'améliorer le rapport signal/bruit.

On notera que les différents éléments constitutifs de la source de lumière polarisée SLP, sont la source de lumière blanche SLP$_i$ et une lentille LE$_i$ qui forme un faisceau de lumière parallèle passant à travers le filtre FILT$_i$ avant de traverser un polariseur POL$_i$.

Les moyens de projection MPROJ$_i$ sont composés par exemple d'un ensemble de lentilles.

Le mode de réalisation préféré du dispositf optique de lecture de la figure 1a, est disposé sur une plate-forme mobile permettant à ce dispositif de pouvoir se déplacer en regard de l'ensemble des pistes du disque de manière à pouvoir observer l'ensemble de celle-ci. Cette plate-forme PL$_i$ comprend un bras support BS$_i$ fixé par l'une de ses extrémités par exemple à un chariot mobile extérieur au disque DISC (non représenté pour simplifier à la figure 1a), et dont l'autre extrémité est solidaire d'un ressort de suspension SP$_i$ qui porte un corps principal CP$_i$. Ce dernier contient par exemple un transducteur électromagnétique d'écriture des informations du disque magnétique, désigné par TE$_i$.

La source SLP$_i$ est souvent disposée à l'extérieur de la plate-forme et est fixe. Il est alors nécessaire de placer sur la plate-forme CP$_i$, un miroir MI$_i$ qui reçoit le faisceau F$_{ii}$ envoyé par la source SLP$_i$ pour l'envoyer ensuite à l'optique OBJGROS par l'intermédiaire de l'élément séparateur ES$_i$.

La figure 1b est une vue de dessus du corps principal CP$_i$ et de l'optique OBJGROS qui, montre de façon précise la disposition relative de ces deux éléments, le sens de rotation du disque étant indiqué par la flèche F.

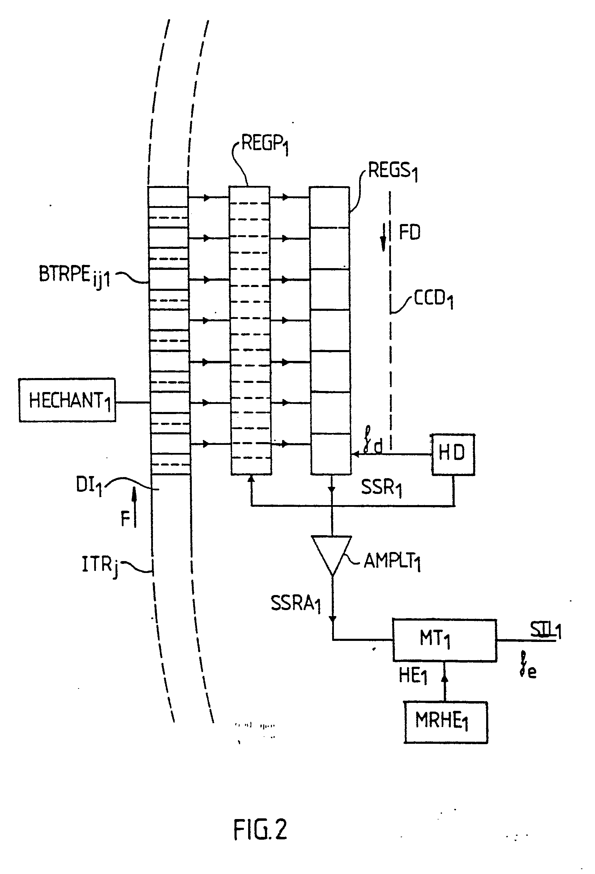

On considère la figure 2, où sont représentés les différents éléments constitutifs essentiels du circuit électronique de lecture mettant en œuvre le procédé de lecture d'informations contenues sur un support magnétique selon l'invention.

Ces différents éléments constitutifs essentiels sont :

— la barrette de transducteur photo-électronique BTRPE$_{ij1}$, contenant une pluralité de transducteurs photo-électroniques alignés. Pour simplifier la description qui suit, on supposera que le circuit électronique ne comprend qu'une seule barrette de transducteurs photo-électroniques, mais il est bien évident que le circuit électronique selon l'invention peut comprendre une pluralité de barrettes parallèles les unes aux autres et séparées les unes des autres par une distance égale au pas PI des images des pistes magnétiques obtenues sur le plan P. Il est clair que le fait d'utiliser une ou plusieurs barrettes ne change rien aux principes de constitution et de fonctionnement du dispositif selon l'invention ;

— le registre à décalage parallèle REGP$_1$ contenant autant de positions mémoires que la barrette BTRPE$_{ij1}$ contient de transducteurs photo-électroniques,

— le registre à décalage série REGS$_1$ contenant autant de positions mémoire que le registre REGP$_1$, son sens de décalage étant indiqué à la figure 2 par la flèche FD,

— l'amplificateur AMPLI$_1$ qui amplifie le signal SSR$_1$ délivré par le registre série REGS$_1$, et délivre le signal SSRA$_1$,

— les moyens de transformation MT$_1$ du signal analogique SSR$_1$, délivré par l'amplificateur AMPLI$_1$ à une fréquence f$_1$, en un signal logique dont la fréquence d'écriture est égale à la fréquence d'écriture des informations magnétiques écrites sur les pistes du disque magnétique DISC ;

— l'horloge de décalage HD$_1$ fournissant un signal logique dont la fréquence f$_d$ établit le rythme de décalage des informations du registre parallèle vers le registre série d'une part et, d'une position mémoire du registre série à la position voisine de ce même registre,

— une horloge d'échantillonnage HECHANT$_1$ délivrant un signal d'échantillonnage, permettant au transducteur photo-électronique de la barrette BTRPE$_{ij1}$ de prendre à des instants d'échantillonnage déterminés par la fréquence du signal d'échantillonnage, l'image électrique de la portion de piste observée par le dispositif optique à ces mêmes instants,

— les moyens de restitution de l'horloge d'écriture MRHE$_1$, délivrant aux moyens de transformation MT$_1$, un signal logique de fréquence égale à la fréquence d'écriture f$_E$ des informations magnétiques sur les pistes du disque DISC.

La barrette de transducteurs photo-électronique BTRPE$_{ij1}$ peut comprendre un nombre extrêmement important d'éléments photo-sensibles (de transducteurs), ce nombre pouvant aller par exemple jusqu'à 2 000.

Ces transducteurs photo-électroniques peuvent avoir une faible surface active, par exemple de l'ordre de 150 à 200 $\mu$m$^2$ soit la surface d'un carré de 12 à 15 microns de côté.

Ces différents éléments photo-sensibles sont alignés suivant une direction parallèle à l'axe OX, c'est-à-dire à la tangente en un point déterminé à l'image ITR$_j$ d'une piste de numéro d'ordre j du disque DISC. Ainsi qu'on peut le voir à la figure 2, la barrette est représentée disposée en regard de l'image ITR$_j$, d'une piste quelconque TR$_j$ du disque DISC, le sens de défilement des informations étant indiqué par la flèche F.

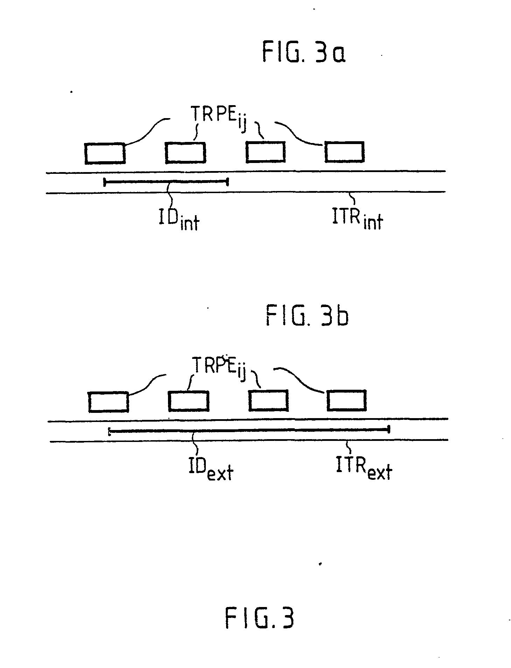

Le grandissement du système optique du dispositif optique de lecture (objection OBJGROS, moyens de projection MPROJ$_j$) sera tel que l'image ID$_j$ d'un domaine magnétique, aura au minimum la longueur de deux éléments photo-sensibles de la barrette BTRPE$_{ij1}$, ce qui veut dire que; quelle que soit la position de l'image ID$_i$ d'un domaine magnétique, par rapport au transducteur photo-électronique, il y aura toujours au moins un transducteur dont la surface active sera entièrement soumise au rayonnement lumineux de cette image. A cet effet, on se reportera aux figures 3a et 3b. Ainsi qu'il a été écrit plus haut, l'écriture des informations sur le disque magnétique DISC est effectué à fréquence constante f$_E$, ce qui signifie que les domaines magnétiques enregistrés sur la piste interne du disque sont beaucoup plus courts que les domaines magnétiques enregistrés sur la piste externe.

Il est évident que cette variation de longueur des domaines magnétiques se reproduit au niveau des images de ces mêmes domaines, on le voit particulièrement bien aux figures 3a et 3b. Ainsi à l'image ID$_{int}$ d'un domaine magnétique appartenant à l'image ITR$_{int}$ d'une piste interne du disque, sont associés deux transducteurs TRPE$_{ij}$ alors qu'à l'image ID$_{ext}$ appartenant à l'image IDR$_{ext}$ d'une piste de la piste externe, sont associés quatre transducteurs TRPE$_{ij}$. On voit que le nombre de transducteurs associés à l'image d'un domaine magnétique varie en fonction de la piste du disque qui est lue.

Le registre parallèle REG$_1$ contient autant de positions mémoire que la barrette BTRPE$_{ij1}$ contient de transducteurs photo-électroniques.

Le temps T$_d$ nécessaire pour décaler (encore appelé temps de décalage) les informations contenues dans le registre REGP$_1$, dans le registre série REGS$_1$, et d'une position mémoire du registre série REGS$_1$ à la position mémoire immédiatement voisine, est le même. Il est déterminé par la fréquence f$_d$ du signal d'horloge fourni par l'horloge HD$_1$.

Les détails de réalisation des moyens de transformation MT$_1$ du signal analogique délivré par l'amplificateur AMPLI$_1$, le signal logique SIL$_1$, ainsi que les moyens de restitution MRHE$_1$ du signal d'horloge d'écriture HE$_1$, seront décrits plus en détail plus loin.

Dans un mode préféré de réalisation du circuit de lecture des informations contenues sur un support magnétique, selon l'invention, les éléments BTRPE$_{ij1}$, REGP$_1$, REGS$_1$, HD$_1$ et AMPLI$_1$ font partie d'une barrette dite C.C.D. (dispositif à transfert de charges) qui est fabriquée, par exemple, par la société FAIRCHILD, caméra et instruments (France F.A. 121, avenue d'Italie, 75013 PARIS). Ces dispositifs à transfert de charges sont désormais bien connus, ils sont par exemple décrits dans les notices techniques de la société FAIRCHILD et par exemple dans la revue Micro Système de septembre-octobre 1981 aux pages 189 à 197. Rappelons que la technique des dispositifs à transfert de charges permet à l'aide de registres à décalage, la manipulation de signaux analogiques (par des lignes à retard, par le stockage temporaire de grandeurs analogiques, etc.). Elles sont essentiellement composées d'une rangée d'éléments photosensibles (ici dans le circuit selon l'invention, ils constituent la barrette de transducteurs photo-électroniques BTRPE$_{ij}$), de deux registres analogiques à décalage (dans notre cas les registres REGP$_1$ et REGS$_1$) et d'un amplificateur de sortie (dans notre cas l'amplificateur AMPLI$_1$). Leurs principes de fonctionnement sont extrêmement simples : lorsqu'un rayon lumineux tombe sur chacun des éléments photosensibles, ceux-ci génèrent des paquets de charges électriques proportionnellement à l'énergie qu'ils reçoivent. Les charges électriques sont alors transférées en parallèle dans le premier registre puis en série dans le second registre. Ce décalage a lieu grâce à l'horloge extérieure (dans notre cas l'horloge HD$_1$).

On comprendra mieux le fonctionnement du circuit électronique d'informations enregistrées sur un support magnétique selon l'invention, tel que représenté à la figure 2, en décrivant le procédé de lecture qu'il met en œuvre.

Ce procédé comprend les cinq phases successives suivantes :

— première phase : on obtient à des instants d'échantillonnage déterminés, au moyen des différentes cellules de la barrette $BTRPE_{ij1}$, l'image électrique de la portion de piste observée par le dispositif optique représenté à la figure 1 à ces mêmes instants, sous forme d'une pluralité d'impulsions analogiques.

Les instants d'échantillonnage sont fournis par exemple, par les fronts montants des impulsions logiques égales à 1 du signal fourni par l'horloge d'échantillonnage $HECHANT_1$. A ces instants, chacune des cellules de la barrette $BTRPE_{ij1}$ délivre une impulsion analogique dont la tension (le courant) est fonction de l'intensité lumineuse de la portion de tache lumineuse qui se trouve en regard de ladite cellule à cet instant d'échantillonnage (On rappelle qu'à une même tache lumineuse sont associées deux à quatre cellules, suivant que l'on observe une piste située à l'intérieur du disque ou à sa périphérie).

— deuxième phase : on décale les impulsions analogiques délivrées par chacune des cellules de la barrette $BRTPE_{ij1}$ dans le registre à décalage parallèle $REGP_1$. Cela signifie que, dès que chacune des cellules photo-électroniques (transducteurs photo-électroniques) a acquis l'image électronique correspondante à la portion de taches lumineuses qui se trouve en regard, l'impulsion analogique correspondante est transmise dans la case mémoire du registre parallèle $REGP_1$ correspondant à ladite cellule.

— troisième phase : on transfère les informations contenues dans le registre $REGP_1$ dans le registre à décalage série $REGS_1$. Si $f_d$ est la fréquence du signal fourni par l'horloge de décalage $HD_1$, ce temps de transfert est égal à $T_d = 1/f_d$.

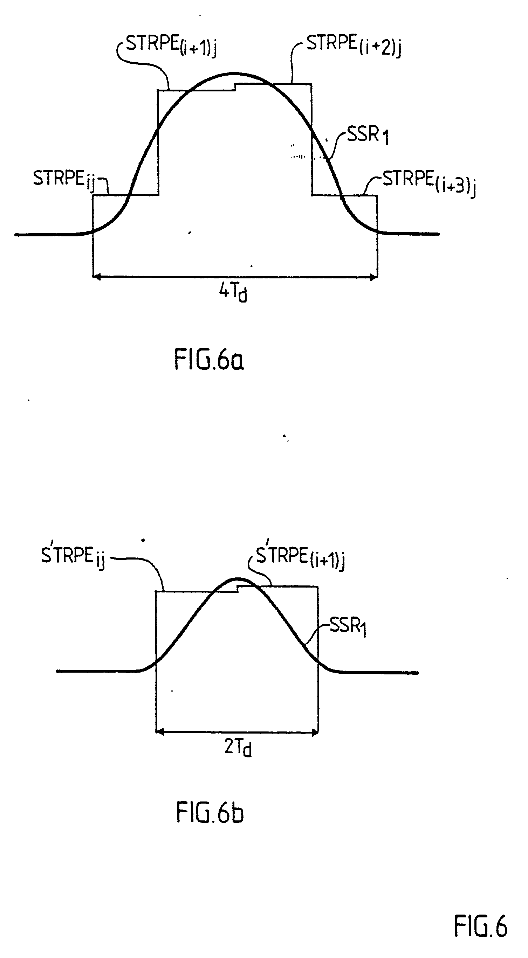

— quatrième phase : on décale ces informations, à savoir les impulsions analogiques provenant de la barrette de transducteurs photo-électroniques par l'intermédiaire du registre parallèle $REGP_1$, dans le sens de la flèche FD vers la sortie du registre série. Celui-ci délivre un signal $SSR_1$, dont chaque impulsion analogique a la forme indiquée aux figures 6a et 6b, forme qui dépend, de la piste du disque que le dispositif optique est en train d'observer, et par conséquent de l'image de cette piste.

On considère la figure 6a. Celle-ci présente la forme d'une impulsion analogique de signal $SSR_1$, lorsque la piste observée par le dispositif optique est la piste extérieure. On rappelle que dans ce cas, à une tache lumineuse, sont associés quatre transducteurs photo-électroniques, à savoir par exemple, les transducteurs $TRPE_{ij}$, $TRPE_{(i+1)j}$, $TRPE_{(i+2)j}$, $TRPE_{(i+3)j}$. Ces transducteurs délivrent respectivement les impulsions analogiques $STRPE_{ij}$, $STRPE_{(i+1)j}$, $STRPE_{(i+2)j}$, $STRPE_{(i+3)j}$. Il est clair que ces quatre signaux sont délivrés simultanément par les quatre transducteurs photo-électroniques correspondants, et transmis simultanément par le registre $REGP_1$ au registre $REGS_1$. Mais du fait que le registre $REGS_1$ est un registre à décalage série, les quatre signaux en question sortent du registre $REGP_1$ les uns à la suite des autres avec un temps de décalage entre deux signaux consécutifs, égal à $T_d$. Ceci apparaît clairement à la figure 6a. Pour plus de commodité, sur cette même figure, une des impulsions analogiques est représentée sous forme d'une impulsion sensiblement rectangulaire, dont la tension (courant) est égale à la valeur moyenne de la tension de l'impulsion analogique. A la sortie du registre, le signal $SSR_1$ a la forme d'une impulsion analogique, qui est la sommation des quatre impulsions analogiques $STRPE_{ij}$ à $SRPE_{(i+3)j}$. La durée de l'impulsion $SSR_1$ est égale à quatre $T_d$.

On considère la figure 6b et les deux signaux $S'TRPE_{ij}$ et $S'TRPE_{(i+1)j}$ délivrés respectivement par les deux transducteurs photo-électroniques $TRPE_{ij}$ et $TRPE_{(i+1)j}$, ceux-ci étant, dans ce cas, associés à une tache lumineuse représentant un bit d'informations de la piste interne du disque DISC.

On voit que, l'impulsion analogique du signal $SSR_1$ a alors une durée égale à $2T_d$. Il est clair que le signal $SSR_1$ résulte comme il avait été précédemment indiqué pour la figure 6a, de la sommation des deux signaux $S'TRPE_{ij}$ et $S'TRPE_{(i+1)j}$.

L'examen des figures 6a et 6b permet d'aboutir aux conclusions suivantes :

— quelle que soit la piste observée par le dispositif optique de lecture, le signal $SSR_1$ de sortie du registre $REGS_1$ a une période supérieure (de deux à quatre fois) à la période $T_d$ de décalage du signal fourni par l'horloge de décalage $HD_1$. Il en résulte que la fréquence du signal $SSR_1$ est toujours inférieure à la fréquence de décalage $f_d$. Soit $f_1$ cette fréquence.

— cette fréquence $f_1$ dépend de la piste observée. Cette fréquence croît lorsque l'on se déplace de la piste externe vers la piste interne.

— cinquième phase : on transforme le signal analogique $SSR_1$ délivré par le registre série $REGS_1$ à une fréquence $f_1$, en un signal logique dont la fréquence est égale à la fréquence d'écriture $f_E$ des informations magnétiques sur les pistes du disque magnétique DISC. Cette transformation du signal $SSR_1$ en un signal logique $SIL_1$ de fréquence $f_E$ est effectuée par les moyens de transformation $MT_1$ commandés par les moyens de restitution de l'horloge d'écriture $MRHE_1$ qui délivrent le signal d'horloge d'écriture $HE_1$ à ces mêmes moyens $MT_1$.

De l'examen des cinq phases du procédé de lecture, on voit que la durée totale de lecture d'un paquet de N bits d'informations, apparaissant sous forme de N taches lumineuses sur le plan P, par le circuit de lecture selon l'invention, est constante : en effet, si l'on désigne par T la durée totale de lecture du paquet de N bits d'informations par le circuit de lecture, on peut écrire

$$T = \tau + T_1 + T_2 \text{ avec,}$$

$\tau$ : temps d'acquisition des N signaux de lecture délivrés par les transducteurs photo-électroniques $TRPE_{ij}$, signaux de lecture correspondant à N taches lumineuses.

$T_1$ : temps de transfert de ces signaux vers le registre à décalage série $REGS_1$. Ce temps $T_1$ est légèrement supérieur à $T_d$, puisqu'il inclut un temps extrêmement faible nécessaire au transfert des signaux délivrés par les barrettes, dans le registre à décalage parallèle $REGP_1$.

$T_2$ : temps de décalage nécessaire au transfert de toutes les informations contenues dans le registre série vers la sortie de celui-ci. Ce temps $T_2$ est égal à autant de fois la période de décalage $T_d$ qu'il y a de positions mémoire, puisqu'il faut attendre que toutes les informations y compris celles contenues dans la position mémoire la plus éloignée de la sortie du registre, parviennent à la sortie de celui-ci.

On voit que chacun de ces facteurs $\tau$, $T_1$, $T_2$, dont la somme constitue la durée totale T de lecture d'un paquet de N bits d'informations, étant constant, le temps T est lui aussi constant.

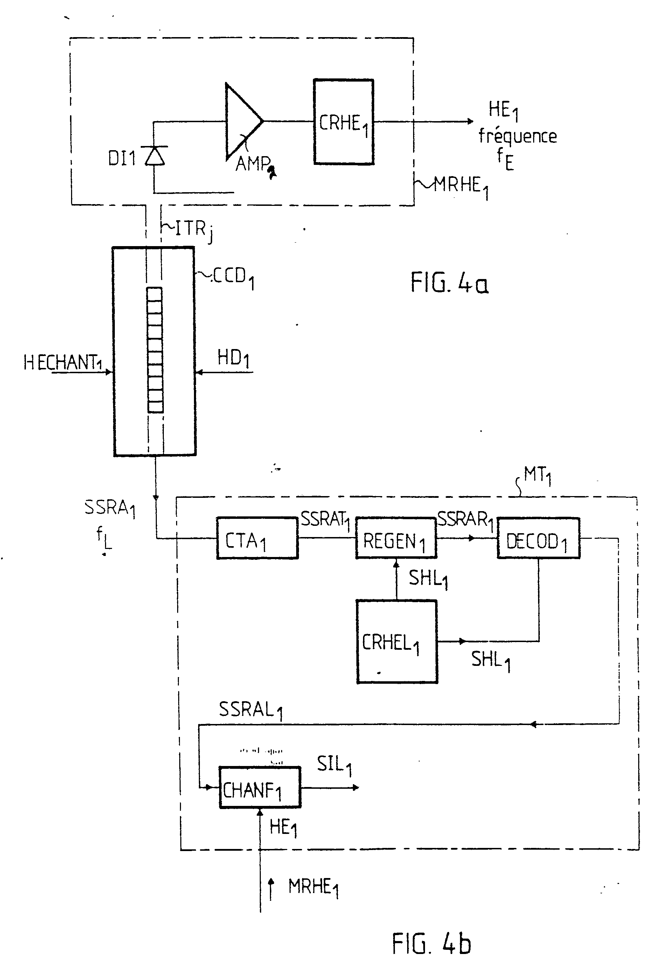

On considère désormais la figure 4a qui illustre un mode de réalisation préféré des moyens de restitution de l'horloge $MRHE_1$.

Les différents éléments constitutifs de ces moyens $MRHE_1$ sont les suivants :
— la diode photosensible $DI_1$,
— l'amplificateur $AMP_1$,
— le circuit de restitution de l'horloge d'écriture $CRHE_1$.

La diode photosensible $DI_1$ est disposée dans le prolongement de la barrette de transducteur $BTRPE_{ij1}$, à l'avant de celle-ci de la manière indiquée à la figure 2. Sur cette figure 2, la diode photosensible $DI_1$ est symbolisée par un petit rectangle dessiné en traits interrompus. On voit que du fait de la position relative de la diode $DI_1$ et de la barrette $BTRPE_{ij1}$, la photodiode $DI_1$, voit défiler devant elle, dans le temps, les taches lumineuses avant la barrette.

Le circuit $CRHE_1$ est un circuit à boucle de verrouillage de phase (Phase Locked Loop) du type de ceux fabriqués par la société MOTOROLA SEMI CONDUCTOR PRODUCT INCORPORATED et décrit dans la note d'application AN-535, de cette société, sous le titre « Phase-locked loop design fundamentals ».

La photodiode $DI_1$ délivre une impulsion analogique dès qu'une tache lumineuse défile devant elle ; cette impulsion est amplifiée par l'amplificateur $AMPL_1$ avant d'être transmise au circuit à boucle de verrouillage de phase $CRHE_1$ qui transforme cette suite d'impulsions analogiques en un signal d'horloge $HE_1$ de fréquence $f_E$.

On considère désormais la figure 4b, qui illustre les détails de réalisation des moyens de transformation $MT_1$.

Les différents éléments constitutifs essentiels des moyens de transformation $MT_1$ sont les suivants :
— le circuit de traitement analogique $CTA_1$,
— le régénérateur $REGEN_1$,
— le décodeur $DECOD_1$,
— le circuit de restitution d'un signal d'horloge dont la fréquence est égale à celle du signal délivré par le registre $REGS_1$,
— le circuit de changement de fréquence $CHANF_1$.

Le circuit de traitement analogique $CTA_1$ reçoit le signal $SSRA_1$, filtre ce signal, l'égalise et l'amplifie. On obtient ainsi à la sortie du circuit $CTA_1$ un signal $SSRAT_1$ analogique égalisé et filtré de fréquence $f_1$.

Ce signal $SSRAT_1$ est envoyé au régénérateur $REGEN_1$ qui est un circuit de décision à seuil transformant les impulsions analogiques du signal $SSRAT_1$ en impulsions logiques égales à 1 ou 0. Ce régénérateur travaille au rythme de la fréquence $f_1$ fournie par un signal d'horloge $SHL_1$ délivré par le circuit $CRHEL_1$, circuit strictement analogue au circuit $CRHE_1$ décrit plus haut.

Le signal délivré par le régénérateur $REGEN_1$, à savoir $SSRAR_1$ est envoyé au décodeur $DECOD_1$ qui transforme ce signal en un signal $SSRAL_1$ logique, de fréquence $f_1$. Ce signal $SSRAL_1$ est un signal logique dont le code est analogue au code d'écriture des informations enregistrées sur le disque DISC.

Pour que ce signal $SSRAL_1$ puisse être lu et exploité de manière correcte par les circuits de lecture de l'unité centrale du système de traitement de l'information auquel appartient la mémoire magnéto-optique contenant le disque DISC, il convient de le transformer en un signal $SIL_1$ de fréquence $f_E$.

C'est l'objet du circuit $CHANF_1$ de transformer le signal $SSRAL_1$, de fréquence $f_1$, en un signal de fréquence $f_E$. Le circuit de changement de fréquence $CHANF_1$ est commandé par le signal d'horloge $HE_1$, de fréquence $f_E$ délivré par les moyens de restitution d'horloge $MRHE_1$ décrits plus haut.

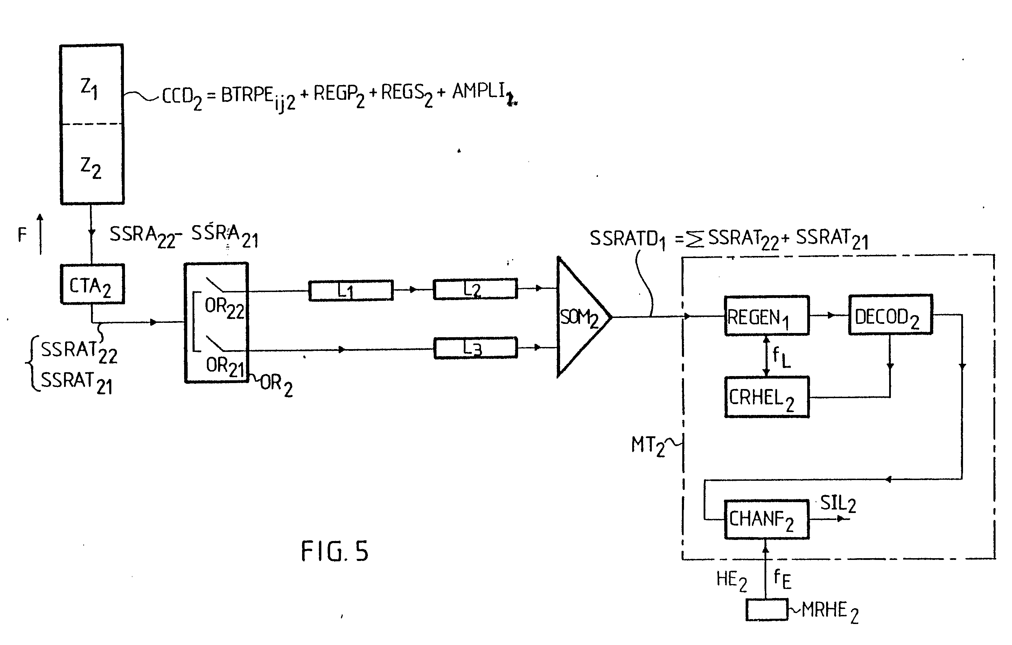

On considère la figure 5 qui représente un exemple préféré de réalisation du circuit de lecture mettant en œuvre le procédé de l'invention, exemple de réalisation utilisant le principe de lecture par redondance. Cette redondance est réalisée afin de relire deux fois le même paquet de N bits enregistrés sur le disque magnétique DISC, et donc de relire deux fois le même paquet des N images correspondantes projetées sur le plan P.

9

Les différents éléments constitutifs essentiels de ce mode de réalisation préféré du circuit de lecture selon l'invention, sont les suivants :

— le dispositif à couplage de charges $CCD_2$, analogue au dispositif à couplage de charges $CCD_1$,

— le circuit de traitement analogique $CTA_2$, analogue au circuit de traitement analogique $CTA_1$ représenté à la figure 4b,

— le circuit $OR_2$ composé des deux portes $OR_{2.2}$ et $OR_{2.1}$,

— les trois lignes à retard $L_1$, $L_2$, $L_3$,

— le dispositif analogique additionneur $SOM_2$,

— les moyens de transformation $MT_2$ analogues au circuit de traitement analogique près, aux moyens de transformation $MT_1$, c'est-à-dire comprenant un régénérateur $REGEN_2$, un décodeur $DECOD_2$, un circuit de restitution d'horloge de lecture des registres de la barrette $CCD_2$, à savoir le circuit $CRHEL_2$, un circuit de changement de fréquence $CHANF_2$,

— les moyens de restitution d'horloge $MRHE_2$, délivrant un signal d'horloge $HE_2$ de fréquence $f_E$ égal à la fréquence d'écriture des informations sur le disque DISC, ces moyens $MRHE_2$ étant strictement identiques aux moyens $MRHE_1$ représentés à la figure 4a.

La barrette $CCD_2$ se compose, comme la barrette $CCD_1$ représentée à la figure 2, d'une barrette de transducteurs photo-électroniques $BTRPE_{ij2}$, d'un registre à décalage parallèle $REGP_2$, d'un registre à décalage série $REGS_2$, et d'un amplificateur $AMPLI_2$.

On divise la barrette $CCD_2$ en deux zones $Z_1$ et $Z_2$. Le sens de défilement des informations sur le disque DISC (et par conséquent sur le plan P où sont projetées les images des informations des pistes du disque DISC) est indiqué par la flèche F. Si l'on suppose que le dispositif $CCD_2$ possède 1 024 transducteurs photo-électroniques (les registres $REGP_2$ et $REGS_2$ contiendront donc 1 024 positions mémoire), les deux zones $Z_1$ et $Z_2$ contiendront donc chacune 512 transducteurs photo-électroniques et 512 positions mémoire dans les registres $REGP_2$ et $REGS_2$. On a vu plus haut, qu'à un domaine magnétique de la piste extérieure, sont associés quatre transducteurs photo-électroniques, alors que pour un domaine magnétique enregistré sur la piste interne, sont associés deux transducteurs photo-électroniques. En conséquence, au maximum (piste extérieure du disque) un paquet d'informations mémorisées dans une zone $Z_1$ ou $Z_2$ du dispositif $CCD_2$ aura la taille suivante, à savoir $N = 512 : 4 = 128$ bits d'informations.

Il est clair que si la fréquence de décalage $f_d$ est égale, par exemple, à 20 mégahertz, le débit maximal (c'est-à-dire la fréquence maximale d'un tel dispositif de lecture comprenant deux zones $Z_1$ et $Z_2$) sera :

$$f_{max} = 20 \times 128/1\ 024 = 2,5 \text{ mégahertz.}$$

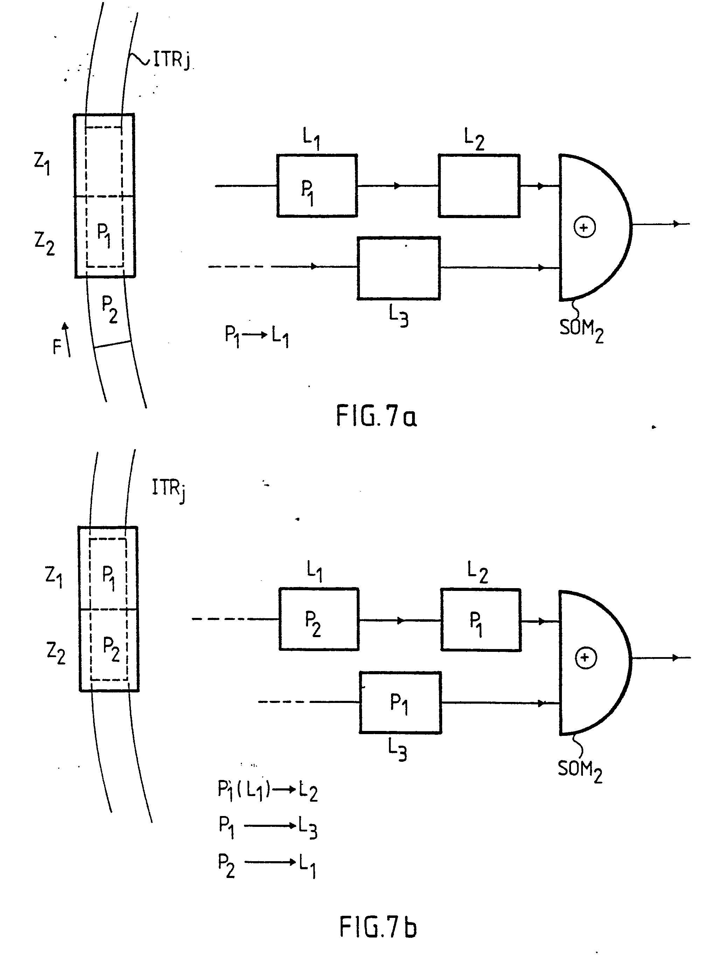

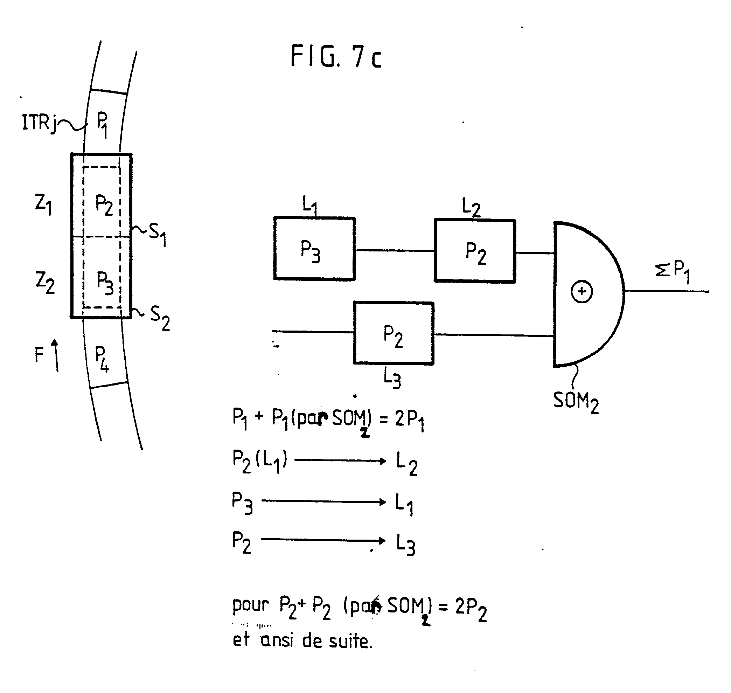

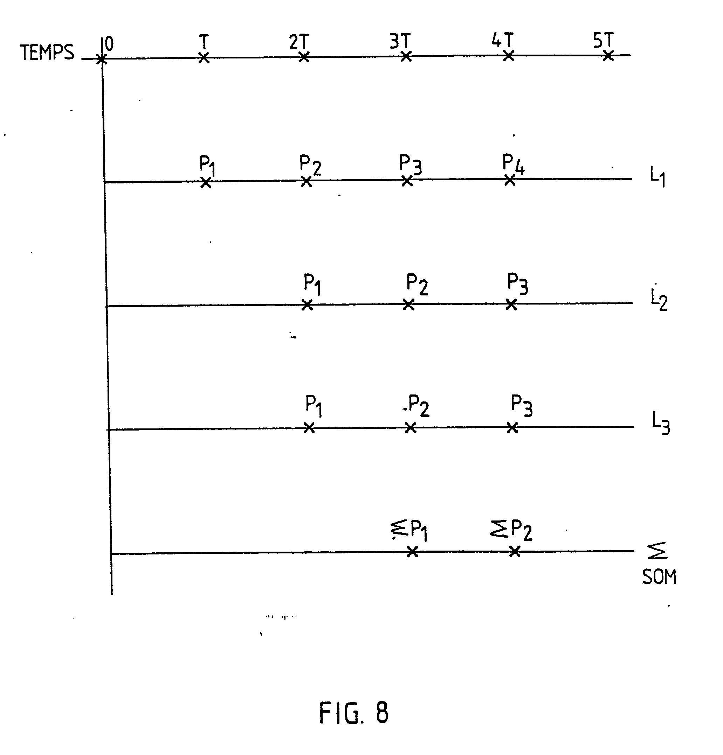

Le fonctionnement du circuit représenté à la figure 5 est illustré par les figures 7a, 7b, 7c et 8.

On considère la lecture de quatre paquets donnés successifs de N bits d'une piste quelconque du disque, dont l'image est $ITR_j$. Ces quatre paquets sont dénommés $P_1$, $P_2$, $P_3$, $P_4$.

Le sens de défilement de l'image $ITR_j$ devant la barrette $CCD_2$ est indiqué par la flèche F. De ce fait, le premier paquet de N bits à être lu est le paquet $P_1$, il est d'abord lu par la zone $Z_2$ de la barrette $CCD_2$ (voir figure 7a). Ce paquet d'informations $P_1$ est transféré dans la ligne à retard $L_1$. Si l'on considère une origine des temps O comme indiqué à la figure 8, la lecture du paquet d'informations $P_1$ s'effectue entre l'instant O et l'instant T le transfert du paquet $P_1$ dans la ligne à retard $L_1$ étant terminé à l'instant T. On voit donc que la ligne à retard $L_1$ contient au moins autant de positions mémoire que la zone $Z_2$. De fait, les trois lignes à retard $L_1$, $L_2$ et $L_3$ sont identiques entre elles et à la zone $Z_2$ ou $Z_1$ du registre $REGS_2$.

A l'instant d'échantillonnage T, le paquet d'informations $P_1$ est lu par la zone $Z_1$, alors que le paquet d'informations suivant $P_2$ est lu par la zone $Z_2$. L'acquisition de ces deux paquets de bits par les zones $Z_1$ et $Z_2$ s'effectue donc entre les instants T et 2T. A l'instant 2T (voir fig. 8), le paquet d'informations $P_1$ qui était contenu dans la ligne à retard $L_1$ est transféré dans la ligne à retard $L_2$ alors que le paquet d'informations $P_2$ lu par la zone $Z_2$ est transféré dans la ligne à retard $L_1$. Pendant ce temps, le paquet d'informations $P_1$ lu par la zone $Z_1$ est transféré dans la ligne à retard $L_3$ (voir fig. 7b).

A l'instant d'échantillonnage 3T, le paquet d'informations $P_1$ occupe la position indiquée à la figure 7c et n'est plus disposé en regard de la zone $Z_1$. Le paquet d'informations $P_2$ est lu par la zone $Z_1$ alors que le paquet $P_3$ est lu par la zone $Z_2$. L'acquisition des informations des paquets $P_2$ par la zone $Z_1$ et $P_3$ par la zone $Z_2$ est terminé à l'instant 4T. A cet instant même, le sommateur $SOM_2$ effectue la somme des paquets d'informations $P_1$ contenu à l'instant 2T dans les lignes à retard $L_2$ et $L_3$. A la sortie $SOM_2$ on recueille donc la somme $\Sigma P_1 = 2P_1$. Le paquet d'informations $P_2$ contenu à l'instant 2T dans la ligne à retard $L_1$ est transféré dans la ligne à retard $L_2$ alors que le paquet d'informations $P_3$ lu par la zone $Z_2$ entre les instants 2T et 3T est transféré dans la ligne à retard $L_1$, pendant que le paquet d'informations $P_2$ lu entre ces instants 2T et 3T par la zone $Z_1$ est transféré dans la ligne à retard $L_3$.

Le fonctionnement du dispositif présenté à la figure 5 se déroule ensuite d'une manière identique à ce qui vient d'être décrit. Ainsi entre les instants 3T et 4T, le paquet d'informations $P_3$ est acquis et lu par la zone $Z_1$ alors que le paquet $P_4$ est lu par la zone $Z_2$. Le paquet $P_4$ est transféré dans la ligne à retard $L_1$ alors que le paquet $P_3$ est transféré dans la ligne à retard $L_2$, le paquet $P_3$ étant transféré également dans la ligne à retard $L_3$ (voir toujours fig. 8). A cet instant 4T le sommateur $SOM_2$ effectue la somme $\Sigma P_2 = 2P_2$.

# 0 094 852

Le raisonnement qui vient d'être fait concernant la description du mode de réalisation préféré du circuit selon l'invention représenté à la figure 5, pourrait être fait de la même manière pour des modes de réalisation du circuit selon l'invention utilisant la redondance afin de lire plusieurs fois (un nombre de fois supérieur à deux) le même paquet de N bits sur une piste d'un disque magnétique. Les tableaux suivants montrent les différents résultats qui peuvent être obtenus dans le cas d'un nombre de redondances supérieur à 2, notamment les fréquences maximales de débit des informations sortant du dispositif $CCD_2$. On voit que cette fréquence diminue lorsque le nombre de redondances s'accroît. Il faut donc trouver un compromis entre le nombre de redondances, qui permet d'accroître sensiblement le rapport signal/bruit et la fréquence maximale qui diminue en fonction de ce nombre de redondances.

Avec une fréquence de décalage de 20 Mhz, on obtient le tableau I suivant :

Tableau I

| Nombre de redondance | Taille d'une zone | Nombre de bits par zone | Fréquence maximale MHz |
|---|---|---|---|
| 1 | 1 024 | 256 | 5 |
| 2 | 512 | 128 | 2,5 |
| 3 | 341 | 85 | 1,6 |
| 4 | 256 | 64 | 1,25 |
| 5 | 204 | 51 | 1 |

Avec une fréquence de décalage de 40 Mhz, on obtient le tableau II suivant :

Tableau II

| | | | |
|---|---|---|---|
| 1 | 1 024 | 256 | 10 |
| 2 | 512 | 128 | 5 |
| 3 | 341,3 | 85 | 3,3 |
| 4 | 256 | 64 | 2,5 |
| 5 | 204,8 | 51,2 | 2 |

## Revendications

1. Procédé optoélectronique de lecture d'informations contenues sur un disque magnétique (SM) à l'intérieur d'une pluralité de pistes, et enregistrées avec une fréquence telle que les domaines magnétiques ont une dimension qui varie d'une piste à l'autre, les informations étant fournies sous forme d'une pluralité de taches lumineuses ($ID_i$) par un dispositif optique observant simultanément une pluralité d'informations sur une pluralité de pistes du disque (SM) pour en projeter l'image agrandie sur une pluralité de transducteurs photoélectroniques ($TRPE_{ij}$), alignés sur au moins une rangée ($BTRPE_{ij1}$, $BTRPE_{ij2}$) selon une direction parallèle à l'image ($ITR_j$) d'une piste, et dont la tension de sortie (ou courant) est fonction de l'intensité lumineuse des taches ($ID_i$), une même tache étant lue plusieurs fois de suite par un nombre correspondant de parties d'une même rangée de transducteurs, le signal de lecture de chacune des parties étant transformé en une suite d'impulsions analogiques par les opérations suivantes :

1. On acquiert, à des instants d'échantillonnage déterminés, au moyen des transducteurs de la rangée ($BTRPE_{ij1}$, $BTRPE_{ij2}$) l'image électrique de la portion de piste observée par le dispositif optique à ces mêmes instants sous forme d'une pluralité d'impulsions analogiques ($S'TRPE_{ij}$, $S'TRPE_{(i+1)j}$),

2. On décale ces impulsions analogiques dans un registre à décalage parallèle ($REGP_1$, $REGP_2$),

11

0 094 852

3. On transfère ces impulsions du registre à décalage parallèle à un registre à décalage série (REGS$_1$, REGS$_2$),

4. On décale ces informations jusqu'à ce qu'elles soient toutes sorties du registre série (REGS$_1$, REGS$_2$) de façon à obtenir un signal de sortie (SSR$_1$) formé d'une suite d'impulsions analogiques, (SSRA$_{21}$, SSRA$_{22}$), les suites d'impulsions résultant d'une même tache étant sommées pour obtenir un signal analogique amplifié (SSRATD$_1$) ayant une fréquence (f$_1$),

5. On transforme ce signal de fréquence (f$_1$) en un signal logique dont la fréquence est égale à la fréquence d'écriture (f$_2$) des informations magnétiques sur les pistes du disque, grâce à des moyens de transformation du signal analogique en signal logique (MT$_1$, MT$_2$).

2. Circuit de lecture des informations contenues sur un disque magnétique (SM) à l'intérieur d'une pluralité de pistes et écrites à une fréquence telle que la dimension des domaines magnétiques varie d'une piste à l'autre recevant les informations sous forme d'une pluralité de taches lumineuses fournies par un dispositif optique observant simultanément une pluralité d'informations sur une pluralité de pistes du disque (SM) pour en projeter l'image agrandie (ID$_i$) sur une pluralité de transducteurs photoélectroniques (TRPE$_{ij}$), alignés sur au moins une rangée (BTRPE$_{ij1}$, BTRPE$_{ij2}$) selon une direction parallèle à l'image (ITR$_i$) d'une piste, et dont la tension de sortie (ou courant) est fonction de l'intensité lumineuse des taches, une même tache (ID$_i$) étant lue plusieurs fois de suite par un nombre correspondant de parties d'une même rangée de transducteurs, le signal de lecture de chacune des parties étant transformé en une suite d'impulsions analogiques (SSRA$_{21}$, SSRA$_{22}$) par les éléments suivants :

— un registre de transfert parallèle (REGP$_1$, REGP$_2$) contenant au moins autant de positions mémoire que la rangée contient de transducteurs photoélectroniques, recevant les signaux délivrés par chacun des transducteurs (TRPE$_{ij}$),

— un registre à décalage série (REGS$_1$, REGS$_2$) contenant au moins autant de positions mémoire qu'il y a de transducteurs photoélectroniques (TRPE$_{ij}$), recevant les informations transmises par le registre de transfert parallèle (REGP$_1$, REGP$_2$),

— une horloge de commande délivrant un signal d'horloge de décalage de fréquence f$_d$ des informations du registre de transfert parallèle dans le registre série et d'une position mémoire du registre série à la position immédiatement voisine,

— un dispositif d'amplification recevant le signal (SSR$_1$) délivré par le registre à décalage série (REGS$_1$, REGS$_2$) et délivrant un signal formé d'une pluralité d'impulsions analogiques (SSRA$_1$, SSRA$_2$), les suites d'impulsions résultant d'une même tache étant sommées pour obtenir un signal analogique amplifié (SSRATD$_1$) de fréquence (f$_1$) qui est transformé par des moyens de transformation du signal analogique (SSRA$_1$) délivrés par le dispositif d'amplification (AMPLI$_1$, AMPLI$_2$) en un signal logique ayant une fréquence égale à la fréquence d'écriture (f$_E$) des information sur le disque (SM).

3. Circuit selon la revendication 2, caractérisé en ce que les moyens de transformation (MT$_1$) comprennent :

— un circuit de traitement analogique (CTA$_1$) qui reçoit le signal délivré par le dispositif d'amplification (AMPLI$_1$, AMPLI$_2$) et délivre un signal analogique égalisé et filtré de fréquence f$_1$ (SSRAT$_1$),

— un régénérateur (REGEN$_1$) recevant un signal délivré par le circuit analogique (CTA$_1$) qui transforme les impulsions analogiques de ce dernier en impulsions logiques au rythme de la fréquence f$_1$,

— un décodeur (DECOD$_1$) qui reçoit le signal délivré par le régénérateur (REGEN$_1$) et le transforme en un signal (SSRAL$_1$) logique de fréquence f$_1$ dont le code est analogue au code d'écriture des informations enregistrées sur le disque (DISC),

— un circuit de restitution de signal d'horloge (CRHEL) dont la fréquence est égale à celle du signal délivré par le registre (REGS$_1$), ce circuit de restitution envoyant un signal de fréquence f$_1$ au régénérateur (REGEN$_1$) et au décodeur (DECOD$_1$),

— un circuit de changement de fréquence (CHANF$_1$) recevant le signal délivré par le décodeur (DECOD$_1$) et délivrant un signal de fréquence f$_E$, ce circuit de changement de fréquence recevant également un signal d'horloge (HE$_1$) de fréquence f$_E$ délivré par des moyens de restitution d'horloge (MRHE$_1$).

4. Circuit selon la revendication 3, caractérisé en ce que les moyens de restitution d'horloge (MRHE$_1$) comprennent :

— une diode photosensible (DI$_1$),

— un amplificateur (AMP$_1$),

— un circuit de restitution d'horloge d'écriture (CRHE$_1$), la diode photosensible (DI$_1$) étant disposée dans le prolongement de la barrette de transducteur (BTRPE$_{ij1}$) de manière à voir défiler, dans le temps, les taches lumineuses (ID$_i$) avant cette barrette, le circuit (CRHE$_1$) recevant le signal délivré par la photodiode (DI$_1$) et amplifié par l'amplificateur (AMP$_1$) et transformant la suite d'impulsions analogiques délivrée par celle-ci (DI$_1$) en un signal d'horloge (HE$_1$) de fréquence f$_E$.

**Claims**

1. Opto-electronic method for reading data present on a magnetic disc (SM) within a plurality of

12

tracks, and recorded at a frequency such that the magnetic domains have a dimension which varies from one track to another, the data being provided in the form of a plurality of light spots ($ID_i$) by an optical device which simultaneously observes a plurality of data on a plurality of tracks of the disc (SM) in order to project their enlarged image onto a plurality of photoelectronic transducers ($TRPE_{ij}$), aligned on at least one row ($BTRPE_{ij1}$, $BTRPE_{ij2}$) along a direction parallel to the image ($ITR_j$) of a track, and of which the output voltage (or current) is a function of the light intensity of the spots ($ID_i$), a same spot being read several times in succession by a corresponding number of parts of a same row of transducers, the read signal of each of the parts being converted into a series of analog pulses by means of the following operations :

1. At particular sampling instants, the electric image of the portion of the track observed by the optical device at these same instants is acquired by means of the transducers of the row ($BTRPE_{ij1}$, $BTRPE_{ij2}$), in the form of a plurality of analog pulses ($S'TRPE_{ij}$, $S'TRPE_{(i+1)j}$),

2. These analog pulses are shifted in a parallel shift register ($REGP_1$, $REGP_2$),

3. These pulses are transferred from the parallel shift register into a series shift register ($REGS_1$, $REGS_2$),

4. These data are shifted until they are all output from the series register ($REGS_1$, $REGS_2$) in such a manner as to obtain an output signal ($SSR_1$) formed by a succession of analog pulses ($SSRA_{21}$, $SSRA_{22}$), the series of pulses resulting from the same spot being summated so as to obtain an amplified analog signal ($SSRATD_1$) having a frequency ($f_1$),

5. This signal having the frequency ($f_1$) is transformed into a logic signal of which the frequency is equal to the write frequency ($f_2$) of the magnetic data on the tracks of the disc, due to means for converting the analog signal into a logic signal ($MT_1$, $MT_2$).

2. Circuit for reading data contained on a magnetic disc (SM) within a plurality of tracks and written at a frequency such that the dimension of the magnetic domains varies from one track to the other receiving the data in the form of a plurality of light spots provided by an optical device which simultaneously observes a plurality of data on a plurality of tracks of the disc (SM) in order to project their enlarged image ($ID_i$) on to a plurality of photo-electronic transducers ($TRPE_{ij}$) lined up in at least one row ($BTRPE_{ij1}$, $BTPE_{ij2}$) along a direction parallel to the image ($ITR_j$) of a track, and of which the output voltage (or current) is a function of the light intensity of the spots, a same spot ($ID_j$) being read several times in succession by a corresponding number of parts of a same row of transducers, the read signal of each of the parts being converted into a succession of analog pulses ($SSRA_{21}$, $SSRA_{22}$) by means of the following elements :

— a parallel transfer register ($REGP_1$, $REGP_2$) containing at least as many memory positions as the row containing the photoelectronic transducers, receiving the signals delivered by each of the transducers ($TREP_{ij}$),

— a series transfer register ($REGS_1$, $REGS_2$) containing at least as many memory positions as there are photo-electronic transducers ($TRPE_{ij}$), receiving the data transmitted by the parallel transfer register ($REGP_1$, $REGP_2$),

— a control clock supplying a frequency shift clock signal having the frequency $f_d$ for shifting the data from the parallel transfer register into the series register and from one memory position of the series register to the immediately adjacent position.

— an amplifier device receiving the signal ($SSR_1$) supplied by the series shift register ($REGS_1$, $REGS_2$) and delivering a signal formed by a plurality of analog pulses ($SSRA_1$, $SSRA_2$), the succession of pulses derived from a same spot being summated in order to obtain an amplified analog signal ($SSRATD_1$) having the frequency ($f_1$) which is transformed by means for transformation of the analog signal ($SSRA_1$) delivered by the amplifier device ($AMPLI_1$, $AMPLI_2$) into a logic signal having a frequency equal to the writing frequency ($f_E$) of the data on the disc (SM).

3. Circuit according to claim 2, characterised in that the transformation means ($MT_1$) comprise :

— an analog processing circuit ($CTA_1$) which receives the signal delivered by the amplifier device ($AMPLI_1$, $AMPLI_2$) and delivers a smoothed and filtered analog signal having the frequency $f_1$ ($SSRAT_1$),

— a regenerator ($REGEN_1$) receiving a signal delivered by the analog circuit ($CTA_1$) which transforms the analog pulses of this latter into logic pulses at the repetition rate of the frequency $f_1$,

— a decoder ($DECOD_1$) which receives the signal delivered by the regenerator ($REGEN_1$) and transforms the same into a logic signal ($SSRAL_1$) having the frequency $f_1$, of which the code is analogous to the writing code of the data recorded on the disc (DISC),

— a restoring circuit for the clock signal ($CRHEL_1$) of which the frequency is equal to that of the signal delivered by the register ($REGS_1$) this restoring circuit sending a signal having the frequency $f_1$ to the regenerator ($REGEN_1$) and to the decoder ($DECOD_1$),

— a frequency change circuit ($CHANF_1$) receiving the signal delivered by the decoder ($DECOD_1$) and delivering a signal having the frequency $f_E$, this frequency changer circuit equally receiving a clock signal ($HE_1$) having the frequency $f_E$ delivered by the clock restoring means ($MRHE_1$).

4. Circuit according to claim 3, characterised in that the clock restoring means ($MRHE_1$) comprise :

— a photosensitive diode ($DI_1$),

— an amplifier ($AMP_1$),

— a writing clock restoring circuit ($CRHE_1$), the photosensitive diode ($DI_1$) being situated in the extension of the strip of the transducer (BTRPE$_{ij1}$) in such a manner as to see pass, in time, the light spots (ID$_i$) before this trip, the circuit (CRHE$_1$) receiving the signal delivered by the photodiode (DI$_1$) and amplified by the amplifier (AMP$_1$) and converting the succession of analog pulses delivered by the photodiode (DI$_1$) into a clock signal (HE$_1$) having the frequency $f_E$.

## Patentansprüche

1. Optoelektronisches Verfahren zum Lesen von Informationen, welche auf einer Magnetplatte (SM) innerhalb mehrerer Spuren enthalten und mit einer solchen Frequenz aufgezeichnet sind, daß die Magnetgebiete eine Abmessung aufweisen, die sich von einer Spur zur anderen ändert, wobei die Informationen in Form einer Mehrzahl von Lichtflecken (ID$_i$) von einer optischen Vorrichtung geliefert werden, welche gleichzeitig mehrere Informationen auf mehreren Spuren der Platte (SM) beobachtet, um deren vergrößertes Bild auf mehrere fotoelektronische Wandler (TRPE$_{ij}$) zu projizieren, welche in wenigstens einer Reihe (BTRPE$_{ij1}$, BTRPE$_{ij2}$) in einer Richtung parallel zum Bild (ITR$_j$) einer Spur ausgerichtet sind und deren Ausgangsspannung (oder Strom) von der Lichtintensität der Lichtflecke (ID$_i$) abhängt, wobei derselbe Lichtfleck mehrmals nacheinander ausgelesen wird durch eine entsprechende Anzahl von Teilen einer selben Reihe von Wandlern, wobei das Lesesignal jedes der Teile in eine Folge von Analogimpulsen durch folgende Operationen umgewandelt wird :

1. Zu bestimmten Abtastmomenten wird mittels der Wandler der Reihe (BTRPE$_{ij1}$, BTRPE$_{ij2}$) das elektrische Bild des Teiles der Spur, der von der optischen Vorrichtung zu diesen selben Zeitpunkten beobachtet wird, in Form einer Mehrzahl von Analogimpulsen (S'TRPE$_{ij}$, S'TRPE$_{(i+1)j}$) erfaßt,

2. Diese Analogimpulse werden in einem Register mit Parallelverschiebung (REGP$_1$, REGP$_2$) verschoben,

3. Diese Impulse werden von dem Register mit Parallelverschiebung zu einem Register mit serieller Verschiebung (REGS$_1$, REGS$_2$) überführt,

4. Diese Informationen werden verschoben, bis sie alle aus dem seriellen Register (REGS$_1$, REGS$_2$) ausgegeben sind, so daß eine Ausgangssignal (SSR$_1$) erhalten wird, welches aus einer Folge von Analogimpulsen (SSRA$_{21}$, SSRA$_{22}$) gebildet ist, wobei die Impulsfolgen, die aus demselben Lichtfleck resultieren, summiert werden, um ein verstärktes Analogsignal (SSRATD$_1$) zu erhalten, welches eine Frequenz (f$_1$) aufweist,

5. Dieses Signal der Frequenz (f$_1$) wird in ein logisches Signal umgesetzt, dessen Frequenz gleich der Schreibfrequenz (f$_2$) der magnetischen Informationen auf den Spuren der Platte ist, unter Verwendung von Mitteln (MT$_1$, MT$_2$) zur Umsetzung des Analogsignals in ein logisches Signal.

2. Schaltung zum Lesen von Informationen, die auf einer Magnetplatte (SM) innerhalb mehrerer Spuren enthalten und mit einer solchen Frequenz aufgezeichnet sind, daß die Abmessung der Magnetgebiete sich von einer Spur zur anderen ändert, welche die Informationen in Form einer Mehrzahl von Lichtflecken empfängt, die von einer optischen Vorrichtung geliefert werden, welche gleichzeitig mehrere Informationen auf mehreren Spuren der Platte (SM) beobachtet, um ihr vergrößertes Bild (ID$_i$) auf mehrere fotoelektronischen Wandler (TRPE$_{ij}$) zu projizieren, welche in wenigstens einer Reihe (BTRPE$_{ij1}$, BTPE$_{ij2}$) in einer Richtung parallel zu dem Bild (ITR$_j$) einer Spur ausgerichtet sind und deren Ausgangsspannung (oder Strom) von der Lichtintensität der Lichtflecke abhängt, wobei derselbe Lichtfleck (ID$_i$) mehrmals nacheinander durch eine entsprechende Anzahl von Teilen einer selben Reihe von Wandlern ausgelesen wird, wobei das Lesesignal jedes der Teile in eine Folge von Analogimpulsen (SSRA$_{21}$, SSRA$_{22}$) durch folgende Elemente umgesetzt wird :

— ein Register mit Parallelverschiebung (REGP$_1$, REGP$_2$), welches wenigstens ebensoviele Speicherplätze aufweist wie die Anzahl von fotoelektronischen Wandlern, welche die Reihe enthält, und welches die Signale empfängt, die von jedem der Wandler (TRPE$_{ij}$) abgegeben werden,

— ein Register mit serieller Verschiebung (REGS$_1$, REGS$_2$), welches wenigstens ebensoviele Speicherplätze aufweist wie fotoelektronische Wandler (TRPE$_{ij}$) vorhanden sind und welches die Informationen empfängt, die von dem Register Mit Parallelverschiebung (REGP$_1$, REGP$_2$) übertragen werden,

— eine steuernde Zeitbasis, welche ein Taktsignal der Frequenz $f_d$ für die Verschiebung der Informationen des Registers mit Parallelverschiebung in das serielle Register und von einem Speicherplatz des seriellen Registers zu dem unmittelbar benachbarten Platz abgibt,

— eine Verstärkervorrichtung, welche das von dem Register mit serieller Verschiebung (REGS$_1$, REGS$_2$) abgegebene Signal (SSR$_1$) empfängt und ein Signal abgibt, das aus einer Mehrzahl von Analogimpulsen (SSRA$_1$, SSRA$_2$) gebildet ist, wobei die Impulsfolgen, welche aus demselben Lichtfleck resultieren, summiert werden, um ein verstärktes Analogsignal (SSRATD$_1$) der Frequenz (f$_1$) zu erhalten, welches umgesetzt wird durch Mittel zur Umsetzung des Analogsignals (SSRA$_1$), welches von der Verstärkervorrichtung (AMPLI$_1$, AMPLI$_2$) abgegeben wird, in ein logisches Signal, dessen Frequenz gleich der Schreibfrequenz (f$_E$) der Informationen auf der Platte (SM) ist.

3. Schaltung nach Anspruch 2, dadurch gekennzeichnet, daß die Umsetzmittel (MT$_1$) enthalten :

— eine analoge Verarbeitungsschaltung (CTA$_1$), welche das von der Verstärkervorrichtung (AMPLI$_1$,

14

AMPLI$_2$) abgegebene Signal empfängt und ein Analogsignal (SSRAT$_1$) der Frequenz f$_1$ abgibt, das geglättet und gefiltert ist,

— eine Regeneriereinrichtung (REGEN$_1$), welche ein von der analogen Schaltung (CTA$_1$) abgegebenes Signal empfängt und die Analogimpulse letzterer in logische Impulse im Rhythmus der Frequenz f$_1$ umsetzt,

— einen Decoder (DECOD$_1$), welcher das von der Regeneriereinrichtung (REGEN$_1$) abgegebene Signal empfängt und es in ein logisches Signal (SSRAL$_1$) der Frequenz f$_1$ umsetzt, dessen Code analog dem Schreibcode für die auf der Platte (DISC) aufgezeichneten Informationen ist,

— eine Schaltung (CRHEL$_1$) zur Wiederherstellung des Taktsignals, dessen Frequenz gleich der des Signals ist, welches das Register (REGS$_1$) abgibt, wobei diese Wiederherstellungsschaltung ein Signal der Frequenz f$_1$ der Regeneriereinrichtung (REGEN$_1$) und dem Decoder (DECOD$_1$) zuführt,

— eine Schaltung (CHANF$_1$) zur Frequenzänderung, welche das von dem Decoder (DECOD$_1$) abgegebene Signal empfängt und ein Signal der Frequenz f$_E$ abgibt, wobei diese Frequenzänderungsschaltung ferner ein Taktsignal (HE$_1$) der Frequenz f$_E$ empfängt, welches von den Taktsignal-Wiederherstellungsmitteln (MRHE$_1$) abgegeben wird.

4. Schaltung nach Anspruch 3, dadurch gekennzeichnet, daß die Taktsignal-Wiederherstellungsmittel (MRHE$_1$) umfassen :

— eine fotoempfindliche Diode (DI$_1$),

— einen Verstärker (AMP$_1$),

— eine Schreibtakt-Wiederherstellungsschaltung (CRHE$_1$), wobei die fotoempfindliche Diode (DI$_1$) in der Verlängerung der Wandlerzeile (BTRPE$_{ij1}$) angeordnet ist, dergestalt, daß sie im Verlauf der Zeit die Lichtflekke (ID$_i$) vor dieser Zeile vorbeilaufen sieht, wobei die Schaltung (CRHE$_1$) das von der Fotodiode (DI$_1$) abgegebene und durch den Verstärker (AMP$_1$) verstärkte Signal empfängt und die Folge von Analogimpulsen, die von der Fotodiode (DI$_1$) abgegeben wird, in ein Taktsignal (HE$_1$) der Frequenz f$_E$ umsetzt.

FIG.1a

FIG.1c

FIG.1

optique OBJGROS

corps principal
CP_i

sens de rotation du disque DISC

vus de dessus

FIG.1b

FIG.2

## FIG. 3a

TRPE$_{ij}$

ID$_{int}$   ITR$_{int}$

## FIG. 3b

TRPE$_{ij}$

ID$_{ext}$   ITR$_{ext}$

## FIG. 3

FIG. 4a

FIG. 4b

FIG. 5

$CCD_2 = BTRPE_{ij2} + REGP_2 + REGS_2 + AMPLI_2$

$SSRA_{22} - SSRA_{21}$

$SSRATD_1 = \sum SSRAT_{22} + SSRAT_{21}$

$\begin{cases} SSRAT_{22} \\ SSRAT_{21} \end{cases}$

0 094 852

FIG.6a

FIG.6b

FIG.6

FIG.7a

$P_1 \longrightarrow L_1$

FIG.7b

$P_1(L_1) \longrightarrow L_2$

$P_1 \longrightarrow L_3$

$P_2 \longrightarrow L_1$

# FIG. 7c

$P_1 + P_1 (\text{par SOM}_2) = 2P_1$

$P_2(L_1) \longrightarrow L_2$

$P_3 \longrightarrow L_1$

$P_2 \longrightarrow L_3$

pour $P_2 + P_2 \ (\text{par SOM}_2) = 2P_2$
et ansi de suite.

TEMPS — 0    T         2T         3T         4T         5T

L₁    $P_1$    $P_2$    $P_3$    $P_4$

L₂    $P_1$    $P_2$    $P_3$

L₃    $P_1$    $P_2$    $P_3$

∑ SOM    $\sum P_1$    $\sum P_2$

FIG. 8